# EUROPÄISCHE PATENTSCHRIFT

(11) **EP 4 461 613 B1**
(45) Veröffentlichungstag und Bekanntmachung des Hinweises auf die Patenterteilung: **18.02.2026**
(21) Anmeldenummer: 24173427.6
(22) Anmeldetag: 30.04.2024
(51) Int. Cl.: B60W 30/16, B60W 10/04, B60W 30/18, B60W 50/14, B60W 10/18

(54) **VERFAHREN ZUR AUSWAHL EINES ZIELOBJEKTS FÜR EIN LÄNGSFÜHRUNGSSYSTEM EINES KRAFTFAHRZEUGS, ELEKTRONISCHES FAHRZEUGFÜHRUNGSSYSTEM FÜR EIN KRAFTFAHRZEUG SOWIE KRAFTFAHRZEUG MIT EINEM ELEKTRONISCHEN FAHRZEUGFÜHRUNGSSYSTEM**
METHOD FOR SELECTING A TARGET OBJECT FOR A LONGITUDINAL GUIDANCE SYSTEM OF A MOTOR VEHICLE, ELECTRONIC VEHICLE GUIDANCE SYSTEM FOR A MOTOR VEHICLE AND MOTOR VEHICLE WITH AN ELECTRONIC VEHICLE GUIDANCE SYSTEM
PROCÉDÉ DE SÉLECTION D'UN OBJET CIBLE POUR UN SYSTÈME DE GUIDAGE LONGITUDINAL D'UN VÉHICULE AUTOMOBILE, SYSTÈME DE GUIDAGE ÉLECTRONIQUE DE VÉHICULE AUTOMOBILE ET VÉHICULE AUTOMOBILE ÉQUIPÉ D'UN SYSTÈME DE GUIDAGE ÉLECTRONIQUE DE VÉHICULE

(30) Priorität: 12.05.2023 DE 102023204457
(43) Veröffentlichungstag der Anmeldung: 13.11.2024
(73) Patentinhaber: VOLKSWAGEN AG, 38440 Wolfsburg (DE)
(72) Erfinder: Ackert, Lukas, 38106 Braunschweig (DE); Hoppe, Jannis, 38100 Braunschweig (DE)

(56) Entgegenhaltungen:
- DE-A1- 19 637 245
- US-A1- 2016 107 687
- US-A1- 2018 345 960
- US-A1- 2018 357 904

## Beschreibung

Die Erfindung betrifft ein Verfahren zur Auswahl eines Zielobjekts für ein Längsführungssystem eines Kraftfahrzeugs. Durch das Längsführungssystem kann zumindest ein Fahrparameter des Kraftfahrzeugs, beispielsweise eine aktuell gefahrene Fahrtgeschwindigkeit des Kraftfahrzeugs, in Abhängigkeit von dem ausgewählten Zielobjekt angepasst werden. Bei dem Zielobjekt kann es sich beispielsweise um ein anderes Kraftfahrzeug handeln, welches dem Kraftfahrzeug oder Eigenfahrzeug entlang einer Eigenfahrspur vorausfährt. Das Längsführungssystem, welches beispielsweise ein automatisches Abstandhaltesystem des Kraftfahrzeugs sein kann, kann als Bestandteil eines elektronischen Fahrzeugführungssystems des Kraftfahrzeugs ausgebildet sein. Weitere Aspekte der Erfindung betreffen ein solches elektronisches Fahrzeugführungssystem sowie ein Kraftfahrzeug mit einem solchen System.

Moderne Kraftfahrzeuge weisen in der Regel ein Längsführungssystem und ein Querführungssystem auf, wobei durch das Längsführungssystem Aktionen des Kraftfahrzeugs gesteuert werden können, die seine Bewegung in Längsrichtung beziehungsweise parallel zur Fahrzeuglängsrichtung betreffen. Durch das Querführungssystem hingegen können solche Aktionen des Kraftfahrzeugs beeinflusst oder gesteuert werden, welche eine Bewegung des Kraftfahrzeugs entlang einer Richtung quer zur beschriebenen Längsführungsrichtung betreffen. Längsführungssysteme können daher insbesondere Aktionen steuern, welche eine Beschleunigung und/oder ein Abbremsen des Kraftfahrzeugs betreffen, während Querführungssysteme hauptsächlich solche Aktionen des Kraftfahrzeugs steuern, welche eine Lenkbewegung des Kraftfahrzeugs betreffen.

Ein bekanntes Beispiel für ein Längsführungssystem besteht in einem automatischen Abstandhaltesystem oder ACC-System (ACC: automatic cruise control). Ein solches System sorgt dafür, dass ein vorbestimmter Abstand zwischen dem Kraftfahrzeug und einem vorausfahrenden Kraftfahrzeug, welches als Zielobjekt für das Längsführungssystem ausgewählt werden kann, nicht unterschritten wird.

Außerdem ist es bekannt, dass durch ein Querführungssystem eines Kraftfahrzeugs ein zumindest teilweise automatisiert durchgeführter Fahrspurwechsel initiiert werden kann. Ein solcher Fahrspurwechsel kann beispielsweise durch das Betätigen eines Blinkers ausgelöst werden. Im Zuge eines solchen Fahrspurwechsels oder Spurwechselvorgangs, bei dem das Kraftfahrzeug von der Eigenfahrspur auf eine zu der Eigenfahrspur benachbart angeordnete Zielfahrspur wechselt, kann für das beschriebene Längsführungssystem ein neues Zielobjekt entlang der Zielfahrspur ausgewählt werden. Mit anderen Worten wird also ab der Initiierung des Spurwechselvorgangs ein Verhalten des Kraftfahrzeugs nicht mehr in Abhängigkeit von einem bislang ausgewählten Zielobjekt entlang der Eigenfahrspur angepasst, sondern in Abhängigkeit von dem neuen Zielobjekt entlang der Zielfahrspur.

US 2018 357 904 A1 offenbart eine Fahrerassistenzvorrichtung zur Unterstützung beim Spurwechsel. Das System erkennt Objekte im Umfeld des Fahrzeugs und berechnet Wahrscheinlichkeiten dafür, in welcher Fahrspur sich diese Objekte befinden. Wird der Spurwechselvorgang abgebrochen, lenkt das System das Fahrzeug automatisch zurück in die ursprüngliche Spur. Das vom ACC (Adaptive Cruise Control) erfasste Zielobjekt wird dabei unabhängig vom Spurwechselvorgang behandelt.

Aus der DE 10 2006 043 149 A1, der DE 11 2018 000 174 T5 und auch aus der DE 10 2009 033 800 A1 sind Verfahren zur Unterstützung eines Fahrers bei der Vorbereitung beziehungsweise bei der Durchführung eines beschriebenen Fahrspurwechsels bekannt. Dabei ist unter anderem vorgesehen, bei einem Abbruch des Fahrspurwechsels als Zielobjekt wieder auf das Zielobjekt der Eigenfahrspur zurückzuwechseln. Dabei kann es in nachteiligerweise passieren, dass unnötig lange auf Zielobjekte entlang der Zielfahrspur des abgebrochenen Spurwechselvorgang geregelt wird. Hierdurch können Komfortabstände oder Sicherheitsabstände gegebenenfalls verletzt werden.

Eine Aufgabe der vorliegenden Erfindung besteht darin, eine allgemeine Verkehrssicherheit zu erhöhen. Insbesondere soll die Zielobjektauswahl im Zusammenhang mit abgebrochenen oder unterbrochenen Spurwechselvorgängen gegenüber den bekannten Verfahren verbessert, insbesondere beschleunigt werden.

Die Aufgabe wird durch die Gegenstände der unabhängigen Patentansprüche gelöst. Vorteilhafte Weiterbildungen der Erfindung sind durch die abhängigen Patentansprüche, die folgende Beschreibung sowie die Figuren beschrieben.

Durch die Erfindung ist ein Verfahren zur Auswahl eines Zielobjekts für ein Längsführungssystem eines Kraftfahrzeugs bereitgestellt. Durch das Längsführungssystem wird zumindest ein Fahrparameter des Kraftfahrzeug in Abhängigkeit von dem ausgewählten Zielobjekt angepasst. Wie eingangs erwähnt, kann es sich bei dem Zielobjekt um ein dem Kraftfahrzeug vorausfahrendes anderes Kraftfahrzeug handeln. Beispielsweise kann durch das Längsführungssystem derart in eine Längsführung des Kraftfahrzeugs eingegriffen werden, dass das Kraftfahrzeug seine aktuelle Fahrtgeschwindigkeit an einem zu dem vorausfahrenden Kraftfahrzeug einzuhaltenden Abstand orientiert oder diesem anpasst.

Gemäß dem hier beschriebenen Verfahren wird das Kraftfahrzeug zunächst entlang einer Eigenfahrspur betrieben. Mit anderen Worten fährt das Kraftfahrzeug also zunächst auf der Eigenfahrspur. Hierbei wird der zumindest eine Fahrparameter des Kraftfahrzeugs durch das Längsführungssystem in Abhängigkeit von einem ersten Zielobjekt angepasst, welches in Fahrtrichtung vor dem Kraftfahrzeug entlang der Eigenfahrspur angeordnet ist. Mit anderen Worten kann es sich bei dem Zielobjekt um ein anderes Kraftfahrzeug handeln, welches in derselben Fahrspur wie das Eigenfahrzeug fährt, wobei beispielsweise ein vorbestimmter Abstand zwischen den Kraftfahrzeugen eingehalten werden soll.

Verfahrensgemäß wird dann durch ein Querführungssystem des Kraftfahrzeugs bzw. Eigenfahrzeugs ein zumindest teilautomatisierter Spurwechselvorgang für das Kraftfahrzeug initiiert. Dies kann beispielsweise auf Veranlassung eines Fahrers des Kraftfahrzeugs erfolgen, welcher beispielsweise zum Einleiten des Spurwechselvorgangs einen Blinker betätigen kann. Der derart eingeleitete Spurwechselvorgang beinhaltet einen Wechsel des Kraftfahrzeugs von der Eigenfahrspur auf eine zu der Eigenfahrspur benachbart angeordnete Zielfahrspur. Der Spurwechselvorgang beinhaltet außerdem einen Wechsel von dem ersten Zielobjekt hin zu einem zweiten Zielobjekt, welches sich in Fahrtrichtung vor dem Kraftfahrzeug zumindest teilweise entlang der Zielfahrspur befindet. Bevorzugt befindet sich das zweite Zielobjekt vollständig entlang der Zielfahrspur. Allerdings können Situationen auftreten, in denen sich nur ein Teil, insbesondere ein überwiegender Teil, des zweiten Zielobjekts entlang der Zielfahrspur befindet. Eine solche Situation tritt zum Beispiel dann auf, wenn es sich bei dem zweiten Zielobjekt um einen überbreiten Lastwagen oder Ähnliches handelt, der zwar entlang der Zielfahrspur fährt, aufgrund seiner Breite aber über die Begrenzungen der Zielfahrspur hinausragt.

Bevorzugt findet der Wechsel zu dem zweiten Zielobjekt bereits mit Beginn des Spurwechselvorgangs statt. Hierdurch kann erreicht werden, dass das Kraftfahrzeug beispielsweise seine Geschwindigkeit schon beim Spurwechselvorgang oder währenddessen an eine Fahrtgeschwindigkeit des zweiten oder neuen Zielobjekts anpasst.

Der beschriebene Spurwechselvorgang kann nun vor seinem Abschluss unterbrochen oder abgebrochen werden. Die Unterbrechung oder der Abbruch des Spurwechselvorgangs kann beispielsweise teilautomatisiert oder vollautomatisiert durch das Querführungssystem erfolgen, beispielsweise wenn erkannt wird, dass sich ein drittes Fahrzeug von hinten mit überhöhter Geschwindigkeit nähert. Der Spurwechselvorgang kann alternativ oder zusätzlich auch durch einen Lenkeingriff eines Fahrers des Eigenfahrzeugs abgebrochen oder unterbrochen werden.

Falls der Spurwechselvorgang unterbrochen oder abgebrochen wird, wird erfindungsgemäß durch eine Bewertungseinrichtung eine Wahrscheinlichkeit dafür ermittelt, dass das Kraftfahrzeug im weiteren Fahrtverlauf in die Eigenfahrspur zurückkehrt. Bevorzugt findet die Wahrscheinlichkeitsermittlung zeitlich gemeinsam mit dem Abbruch oder mit der Unterbrechung des Spurwechselvorgangs statt. Bevorzugt findet also die Wahrscheinlichkeitsermittlung gleichzeitig mit dem Abbruch oder der Unterbrechung des Spurwechselvorgangs statt. Es kann also ohne oder mit nur geringer zeitlicher Verzögerung ermittelt werden, wie wahrscheinlich es ist, dass das Kraftfahrzeug infolge der Unterbrechung oder des Abbruchs des Spurwechselvorgangs in die Eigenfahrspur zurückkehrt. Erfindungsgemäß wird in Abhängigkeit von der ermittelten Wahrscheinlichkeit für den weiteren Fahrtverlauf entweder das zweite Zielobjekt beibehalten, oder erneut das erste Zielobjekt ausgewählt, oder kein Zielobjekt für das Längsführungssystem ausgewählt.

Durch die Erfindung ergibt sich der Vorteil, dass nicht unnötig lange trotz abgebrochenem Spurwechselvorgang auf ein Zielobjekt in der ehemaligen Zielfahrspur geregelt wird. Vielmehr kann bei der entsprechenden Wahrscheinlichkeit direkt wieder auf das Zielobjekt entlang der ursprünglichen Eigenfahrspur geregelt werden. Hierdurch wird ein Verkehrsfluss verbessert und eine allgemeine Verkehrssicherheit erhöht.

Zu der Erfindung gehören auch Ausführungsformen, durch die sich zusätzliche Vorteile ergeben.

Eine Ausführungsform sieht vor, dass die Wahrscheinlichkeit in Abhängigkeit von einem aktuellen Status des Längsführungssystems des Kraftfahrzeugs beim Unterbrechen oder Abbrechen des Spurwechselvorgangs und/oder in Abhängigkeit von einem aktuellen Status des Querführungssystems des Kraftfahrzeugs beim Unterbrechen oder Abbrechen des Spurwechselvorgangs ermittelt wird. Mit anderen Worten kann zum Ermitteln der Wahrscheinlichkeit ein Informationsaustausch zwischen dem Längs- und dem Querführungssystem stattfinden. Die Bewertungseinrichtung kann also von dem Längsführungssystem und/oder von dem Querführungssystem eine Information betreffend einen jeweiligen Status eines der Systeme empfangen und zur Ermittlung der Wahrscheinlichkeit auswerten. Der Status des Längsführungssystems kann beispielsweise eine Information darüber beinhalten, ob das Längsführungssystem beim Unterbrechen oder beim Abbruch des Spurwechselvorgangs aktiv oder inaktiv war. Außerdem kann der Status des Längsführungssystems beinhalten, auf welches Zielobjekt das Längsführungssystem zum Zeitpunkt des Unterbrechens oder des Abbrechens des Spurwechselvorgangs ausgerichtet oder eingestellt war. Beispielsweise kann einem jeweiligen Status oder einer jeweiligen Information, die in einem jeweiligen Status beinhaltet ist, ein vorbestimmter Wahrscheinlichkeitswert zugeordnet werden. Die Bewertungseinrichtung kann dann auf Basis der Wahrscheinlichkeitswerte und mittels eines Algorithmus die Gesamtwahrscheinlichkeit für das Verbleiben oder für das erneute Wechseln (Zurückwechseln) des Kraftfahrzeugs in die Eigenfahrspur ermitteln.

Bevorzugt beinhaltet der aktuelle Status des Querführungssystems zumindest eine Information zu einem aktuell von dem Querführungssystem geforderten Lenkmoment. Dabei kann das aktuell geforderte Lenkmoment ein Zurücklenken des Kraftfahrzeugs in Richtung der Eigenfahrspur umfassen. Eine derartige Information, also eine Information über ein aktuelles Lenkmoment des Querführungssystems, welches zurück in die Eigenfahrspur führt, kann einen vergleichsweise hohen Wahrscheinlichkeitswert dafür aufweisen, dass das Kraftfahrzeug im weiteren Fahrtverlauf in die Eigenfahrspur zurückkehrt. In der Folge kann die Bewertungseinrichtung entscheiden, dass erneut das erste Zielobjekt für den weiteren Fahrtverlauf ausgewählt wird. Das aktuell von dem Querführungssystem geforderte Lenkmoment kann allerdings auch null betragen, mit anderen Worten kann kein systemseitiges Lenken mehr stattfinden. In diesem Fall kann beispielsweise auf Basis eines aktuellen Trägheitsmoments des Kraftfahrzeugs ermittelt werden, ob dieses sich wahrscheinlich weiter in Richtung der Zielfahrspur bewegen wird oder ob das Kraftfahrzeug wahrscheinlich wieder in die Eigenfahrspur zurückkehren wird.

Insbesondere für den beschriebenen Fall, wonach keine systemseitige Lenkung durch das Querführungssystem mehr stattfindet, kann es vorteilhaft sein, zusätzlich eine aktuelle Fahrbahnkrümmung der Fahrbahn entlang der Eigenfahrspur und/oder entlang der Zielfahrspur oder auch eine Fahrbahnquerneigung der Fahrbahn entlang der Eigenfahrspur und/oder der Zielfahrspur zur Ermittlung der Wahrscheinlichkeit bereitzustellen. Anhand dieser Faktoren kann die Wahrscheinlichkeit ermittelt werden, dass das Kraftfahrzeug auch ohne systemseitiges Lenken in die Eigenfahrspur zurückkehrt. Die aktuelle Fahrbahnquerneigung kann dabei mittels eines Inertial Measurement Unit (IMU) des Kraftfahrzeugs ermittelt werden. Die aktuelle Fahrbahnkrümmung kann beispielsweise auch anhand einer in einem Navigationssystem des Kraftfahrzeugs abgespeicherten digitalen Karte bekannt sein. Mit anderen Worten können die beschriebenen Informationen aus anderen Fahrzeugsystemen, welche Teile eines Umfeldsensorsystems des Kraftfahrzeugs sein können, bereitgestellt werden.

Alternativ oder zusätzlich kann auch ein aktuelles Fahrerlenkmoment erfasst werden. Das Fahrerlenkmoment beschreibt, ob und wie ein Fahrer des Kraftfahrzeugs manuell in eine Lenkung des Kraftfahrzeugs eingreift. Das Fahrerlenkmoment kann beispielsweise anhand eines Lenkmomentsensors oder auch anhand einer Fahrerbeobachtung, beispielsweise durch Kameras im Fahrzeuginnenraum, erfolgen. Lenkt der Fahrer beispielsweise aktiv wieder in Richtung der Eigenfahrspur, so kann die Bewertungseinrichtung als Wahrscheinlichkeit dafür, dass das Kraftfahrzeug im weiteren Fahrtverlauf in die Eigenfahrspur zurückkehrt, einen Wert von nahe 100% ansetzen. Eine derart hohe Wahrscheinlichkeit wird dazu führen, dass erneut das erste Zielobjekt für das Fahrzeuglängsführungssystem ausgewählt wird.

Durch die zusätzliche Berücksichtigung der hier genannten Faktoren wird eine Wahrscheinlichkeitsermittlung in vorteilhafter Weise weiter verbessert.

Alternativ oder zusätzlich kann auch anhand einer für das Kraftfahrzeug bereitgestellten Routennavigation die Wahrscheinlichkeit für ein Zurückwechseln des Kraftfahrzeugs in die Eigenfahrspur ermittelt werden. Ist gemäß der Routennavigation beispielsweise vorgesehen, dass das Kraftfahrzeug eine Autobahnausfahrt nehmen soll, die sich in wenigen hundert Metern vor dem Kraftfahrzeug befindet und wird ein Überholvorgang abgebrochen, so kann ein vergleichsweise hoher Wahrscheinlichkeitswert dafür ermittelt werden, dass das Kraftfahrzeug in die Eigenfahrspur zurückwechselt. Der hohe Wahrscheinlichkeitswert kann beispielsweise über 70 oder 75% betragen.

Alternativ oder zusätzlich kann die Wahrscheinlichkeit auch in Abhängigkeit von einem Abstand und/oder in Abhängigkeit von einer Änderung des Abstands ermittelt werden, der beim Unterbrechen oder Abbrechen des Spurwechselvorgangs zwischen zumindest einem Reifen des Kraftfahrzeugs und einer Trennlinie zwischen der Eigenfahrspur und der Zielfahrspur besteht. Unter einer Trennlinie im Zusammenhang mit der vorliegenden Erfindung ist insbesondere eine Fahrbahnmarkierung zu verstehen, welche für eine optische Trennung zwischen der Eigenfahrspur und der Zielfahrspur sorgt. Der beschriebene Abstand oder die sogenannte distance to line crossing (DLC) ist demnach ein Indikator für die Wahrscheinlichkeit, dass das Eigenfahrzeug in die Eigenfahrspur zurückkehrt oder nicht. Ganz generell kann einem größeren Abstand eine höhere Wahrscheinlichkeit dafür zugeordnet werden, dass das Kraftfahrzeug in der Eigenfahrspur verbleibt oder in diese zurückkehrt. Wird der Spurwechselvorgang jedoch erst bei einem kleineren Abstand oder sogar erst bei einem teilweisen Überqueren der Trennlinie abgebrochen, so ist die Wahrscheinlichkeit dafür, dass das Eigenfahrzeug in die Eigenfahrspur zurückkehrt, vergleichsweise geringer.

Bevorzugt kann die Wahrscheinlichkeit also auch in Abhängigkeit davon ermittelt werden, ob und insbesondere in welchem Ausmaß das Kraftfahrzeug die Trennlinie beim Unterbrechen oder Abbrechen des Spurwechselvorgang bereits zumindest teilweise überquert hat.

Eine weitere Ausführungsform sieht vor, dass mittels einer Benutzerschnittstelle des Kraftfahrzeugs eine Aufforderung an einen Fahrer des Kraftfahrzeugs bereitgestellt wird, das ausgewählte Zielobjekt zu bestätigen. Mit anderen Worten kann die Bewertungseinrichtung das ausgewählte Zielobjekt für den Fahrer zur Auswahl stellen. Die Benutzerschnittstelle kann dabei beispielsweise eine graphische Oberfläche, beispielsweise einen Bildschirm im Kraftfahrzeuginnenraum, umfassen, wobei der Fahrer mittels Touch-Bedienung eines von mehreren auf dem Bildschirm dargestellten Zielobjekten auswählen kann. Alternativ oder zusätzlich kann die Darstellung auf einem Kombiinstrument des Kraftfahrzeugs, beispielsweise auf einem Display hinter dem Lenkrad des Kraftfahrzeugs, erfolgen.

Für Anwendungsfälle oder Anwendungssituationen, die sich bei dem Verfahren ergeben können und die hier nicht explizit beschrieben sind, kann vorgesehen sein, dass gemäß dem Verfahren eine Fehlermeldung und/oder eine Aufforderung zur Eingabe einer Nutzerrückmeldung ausgegeben und/oder eine Standardeinstellung und/oder ein vorbestimmter Initialzustand eingestellt werden.

Ein weiterer Aspekt der Erfindung betrifft ein Fahrzeugführungssystem zum zumindest teilweise automatisierten Betreiben eines Kraftfahrzeugs mit einem Querführungssystem, einem Längsführungssystem und einer Bewertungseinrichtung, wobei das elektronische Fahrzeugführungssystem dazu ausgebildet ist, ein Ausführungsform des erfindungsgemäßen Verfahrens durchzuführen.

Ein weiterer Aspekt der Erfindung betrifft ein Kraftfahrzeug mit einem solchen elektronischen Fahrzeugführungssystem.

Ein weiterer Aspekt der Erfindung betrifft ein Verfahren zum zumindest teilautomatisierten Betreiben eines Kraftfahrzeugs mittels eines elektronischen Fahrzeugführungssystems, wobei in Abhängigkeit von der Zielobjektauswahl ein Befehl zum Anpassen des zumindest einen Fahrparameters an das ausgewählte Zielobjekt erzeugt wird.

Zu der Erfindung gehören auch Weiterbildungen der weiteren erfindungsgemäßen Aspekte, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen der weiteren erfindungsgemäßen Aspekte hier nicht noch einmal beschrieben.

Die Erfindung umfasst auch die Kombinationen der Merkmale der beschriebenen Ausführungsformen.

Im Folgenden werden Ausführungsbeispiele der Erfindung beschrieben. Hierzu zeigt:
- Fig. 1: eine schematische Darstellung eines Kraftfahrzeugs mit einem elektronischen Fahrzeugführungssystem;
- Fig. 2: eine schematische Darstellung einer beispielhaften Spurwechselsituation;
- Fig. 3: eine schematische Darstellung eines elektronischen Fahrzeugführungssystems;
- Fig. 4: eine schematische Darstellung eines Verfahrens zum Auswählen eines Zielobjekts für ein Längsführungssystem eines Kraftfahrzeugs; und
- Fig. 5: eine schematische Darstellung eines Verfahrens zum Betreiben eines Kraftfahrzeugs.

Bei den im Folgenden erläuterten Ausführungsbeispielen handelt es sich um bevorzugte Ausführungsbeispiele der Erfindung. Bei den Ausführungsbeispielen stellen die beschriebenen Komponenten jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsbeispiele auch durch weitere der bereits beschriebenen Merkmale der Erfindung ergänzbar.

In den Figuren sind funktionsgleiche Elemente jeweils mit denselben Bezugszeichen versehen.

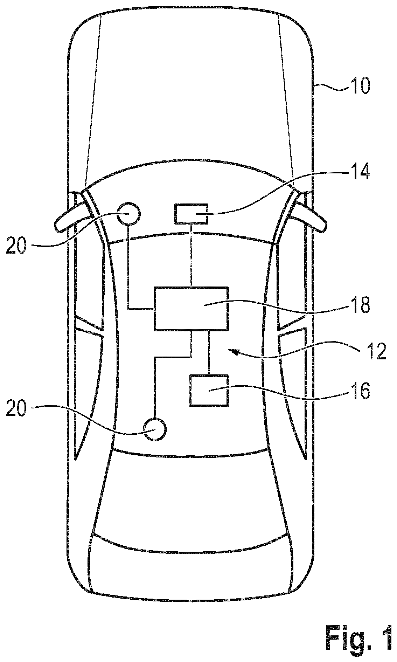

Fig. 1 zeigt eine schematische Darstellung eines Kraftfahrzeugs 10 mit einem elektronischen Fahrzeugführungssystem 12. Das elektronische Fahrzeugführungssystem 12 kann ein Längsführungssystem 14, ein Querführungssystem 16, eine Bewertungseinrichtung 18 und ein Umfeldsensorsystem mit einem oder mehreren Sensoren 20 umfassen.

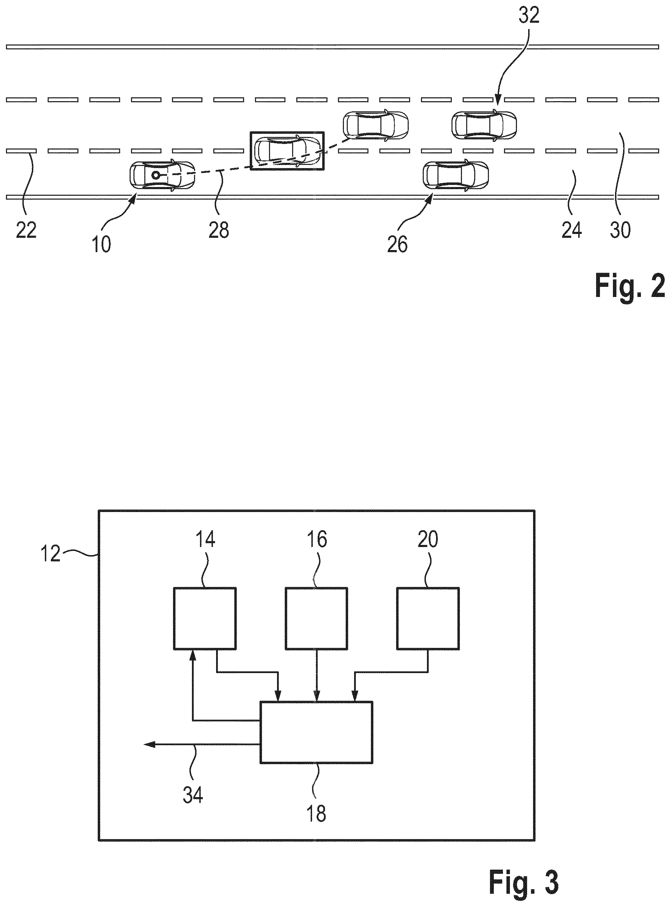

Die Bewertungseinrichtung 18 kann dazu ausgebildet sein, Informationen von dem Längsführungssystem 14 und/oder dem Querführungssystem 16 zu empfangen, welche beispielsweise einen aktuellen Status eines jeweiligen der Systeme 14, 16 beinhaltet. Außerdem kann die Bewertungseinrichtung 18 dazu ausgebildet sein, von den Sensoren 20 des Umfeldsensorsystems Informationen eines Umfelds eines Kraftfahrzeugs 10 zu empfangen. Beispielsweise können die Sensoren 20 oder zumindest einer der Sensoren 20 als ein Kamerasensor 20 ausgebildet sein, wobei mittels des Kamerasensors 20 beispielsweise erfasst werden kann, wie weit das Kraftfahrzeug 10 oder zumindest ein Reifen des Kraftfahrzeugs 10 zu einem vorbestimmten Zeitpunkt von einer Fahrbahnbegrenzungslinie 22 (siehe Fig. 2) entfernt ist. Die Bewertungseinrichtung 18 kann beispielsweise eine Recheneinheit aufweisen, die dazu ausgebildet sein kann, auf Basis der Informationen aus dem Längsführungssystem 14, dem Querführungssystem 16 und/oder den weiteren beschriebenen Informationen eine Wahrscheinlichkeit für einen weiteren Fahrtverlauf des Kraftfahrzeugs 10 zu berechnen. Beispielsweise kann die Recheneinheit ein Computerprogramm ausführen, welches die entsprechenden Befehle enthält.

Fig. 2 zeigt eine schematische Darstellung einer beispielhaften Spurwechselsituation. In der gezeigten Situation ist das Kraftfahrzeug 10 oder das Eigenfahrzeug entlang der Eigenfahrspur 24 unterwegs. Während des Betriebs des Kraftfahrzeugs 10 entlang der Eigenfahrspur 24 kann durch das Längsführungssystem 14 des Kraftfahrzeugs 10 beispielsweise eine aktuelle Fahrtgeschwindigkeit des Kraftfahrzeugs 10 an ein erstes Zielobjekt 26 angepasst werden, wobei das erste Zielobjekt 26 im vorliegenden Beispiel ein Fremdfahrzeug ist, welches vor dem Eigenfahrzeug 10 entlang der Eigenfahrspur 24 fährt.

Mit der gestrichelten Linie 28 ist in Fig. 2 eine Fahrtrajektorie 28 des Kraftfahrzeugs 10 angedeutet, welche im Zuge eines Spurwechselvorgangs des Kraftfahrzeugs 10 von der Eigenfahrspur 24 auf die benachbart angeordnete Zielfahrspur 30 befahren werden wird. Entlang einer Zielfahrspur 30 fährt ein weiteres Kraftfahrzeug 32, welches durch die Bewertungseinrichtung 18 als neues Zielobjekt 32 für das Kraftfahrzeug 10 ausgewählt werden kann, sobald dieses entlang der Zielfahrspur 30 fährt.

Fig. 3 zeigt eine schematische Darstellung eines elektronischen Fahrzeugführungssystems 12 nach einer erfindungsgemäßen Ausführungsform. Das elektronische Fahrzeugführungssystem 12 beinhaltet hier ein Längsführungssystem 14, ein Querführungssystem 16, weitere Sensoren 20 eines Umfeldsensorsystems des Kraftfahrzeugs 10 sowie eine Bewertungseinrichtung 18. Aus dem Längsführungssystem 14 beziehungsweise aus dem Querführungssystem 16 kann die Bewertungseinrichtung 18 Informationen hinsichtlich eines jeweiligen Status eines jeweiligen der Systeme 14, 16 empfangen. Von den Sensoren 20 des Umfeldsensorsystems des Kraftfahrzeugs 10 kann die Bewertungseinrichtung 18 Informationen hinsichtlich einer Fahrzeugumgebung des Kraftfahrzeugs 10 empfangen, wobei die Informationen Einfluss auf die Ermittlung der Wahrscheinlichkeit dafür haben, dass das Kraftfahrzeug 10 im weiteren Fahrtverlauf nach Abbruch eines Spurwechselvorgangs in die Eigenfahrspur 24 zurückkehrt. Sofern die ermittelte Wahrscheinlichkeit einem vorbestimmten Mindestwert entspricht, kann durch die Bewertungseinrichtung 18 ein Vorschlag an das Längsführungssystem 14 erfolgen, wonach als neues Zielobjekt erneut das erste Zielobjekt 26 entlang der Eigenfahrspur 24 ausgewählt werden soll. Optional kann die Bewertungseinrichtung 18 keinen Vorschlag hinsichtlich eines auszuwählenden Zielobjekts machen, sofern die ermittelte Wahrscheinlichkeit den vorbestimmten Grenzwert unterschreitet. Der letztgenannte Fall ist in Fig. 3 schematisch durch den Pfeil 34 dargestellt.

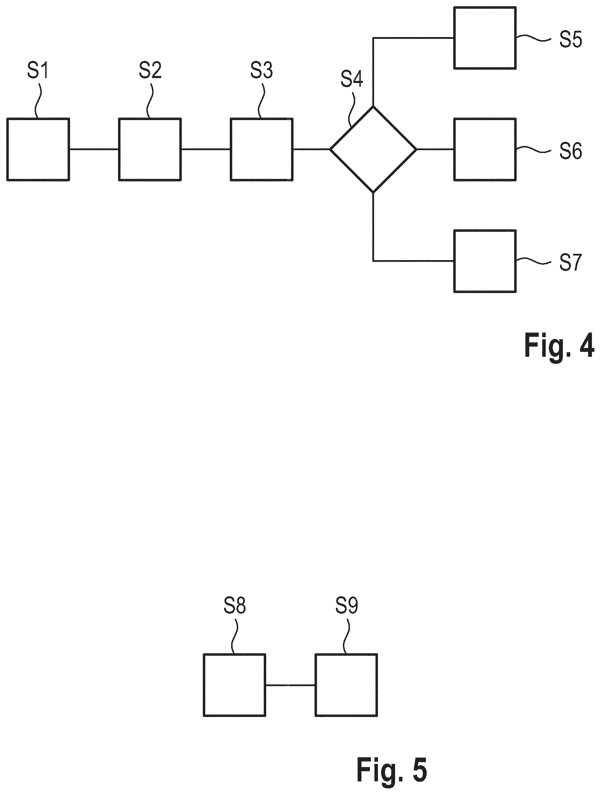

Fig. 4 zeigt eine schematische Darstellung eines Verfahrens zum Auswählen eines Zielobjekts 26, 32 für ein Längsführungssystems 14 eines Kraftfahrzeugs 10. Hierbei wird durch das Längsführungssystem 14 zumindest ein Fahrparameter des Kraftfahrzeugs 10 in Abhängigkeit von dem ausgewählten Zielobjekt 26, 32 angepasst.

In einem Verfahrensschritt S1 wird das Kraftfahrzeug 10 zunächst entlang einer Eigenfahrspur 24 betrieben, wobei der zumindest eine Fahrparameter des Kraftfahrzeugs 10 durch das Längsführungssystem 14 in Abhängigkeit von einem ersten Zielobjekt 26 angepasst wird, welches in Fahrtrichtung vor dem Kraftfahrzeug 10 entlang der Eigenfahrspur 24 fährt. In einem Schritt S2 wird durch ein Querführungssystem 16 des Kraftfahrzeugs 10 ein zumindest teilautomatisierter Spurwechselvorgang für das Kraftfahrzeug 10 initiiert, wobei der Spurwechselvorgang einen Wechsel des Kraftfahrzeugs 10 von der Eigenfahrspur 24 auf eine zu der Eigenfahrspur 24 benachbart angeordnete Zielfahrspur 30 beinhaltet. Außerdem beinhaltet der Spurwechselvorgang einen Wechsel von dem ersten Zielobjekt 26 hin zu einem zweiten Zielobjekt 32, wobei das zweite Zielobjekt 32 in Fahrtrichtung vor dem Kraftfahrzeug 10 entlang der Zielfahrspur 30 angeordnet ist.

In einem Verfahrensschritt S3 wird der Spurwechselvorgang durch das Querführungssystem 16 abgebrochen. Dies kann beispielsweise dadurch begründet sein, dass durch das Umfeldsensorsystem des Kraftfahrzeugs 10 erkannt wird, dass sich entlang der Zielfahrspur 30 von hinten ein weiteres Kraftfahrzeug mit einer stark überhöhten Geschwindigkeit annähert. In einem Schritt S4 wird daraufhin durch die Bewertungseinrichtung 18 des Kraftfahrzeugs 10 eine Wahrscheinlichkeit dafür ermittelt, dass das Kraftfahrzeug 10 im weiteren Fahrtverlauf in die Eigenfahrspur 24 zurückkehrt. In Abhängigkeit von der ermittelten Wahrscheinlichkeit ergeben sich im dargestellten Beispiel drei mögliche Vorschlagsoptionen für die Bewertungseinrichtung 18. Ergibt die Wahrscheinlichkeitsermittlung, dass das Kraftfahrzeug 10 wahrscheinlich im weiteren Fahrtverlauf nicht in die Eigenfahrspur 24 zurückkehren wird, so wird in einem Schritt S5 das zweite Zielobjekt 32 als Zielobjekt beibehalten. Ergibt die Wahrscheinlichkeitsermittlung jedoch, dass es wahrscheinlich ist, dass das Kraftfahrzeug 10 im weiteren Fahrtverlauf in die Eigenfahrspur 24 zurückkehrt, so wird in einem Schritt S6 erneut das erste Zielobjekt 26 als Zielobjekt ausgewählt. Alternativ kann in einem Schritt S7 die Zielobjektauswahl unterbleiben. Dies kann zum Beispiel dann sinnvoll sein, wenn keine eindeutige Wahrscheinlichkeit ermittelt werden kann. Der Verfahrensschritt S7 kann alternativ oder zusätzlich enthalten, dass einem Fahrer des Kraftfahrzeugs 10 mitgeteilt wird, dass aktuell kein Zielobjekt für das Längsführungssystem 14 ausgewählt ist. Alternativ oder zusätzlich kann der Fahrer dann beispielsweise anhand einer Berührungsbedienungsgeste eines Touchbildschirms in einem Innenraum des Kraftfahrzeugs 10 eines der möglichen Zielobjekte 26, 32 für das Längsführungssystem 14 manuell auswählen.

Fig. 5 zeigt eine schematische Darstellung eines Verfahrens zum Betreiben eines Kraftfahrzeugs 10. In der Darstellung der Fig. 5 sind die im Zusammenhang mit der Fig. 4 beschriebenen Verfahrensschritte S1 bis S5 oder S1 bis S6 oder S1 bis S7 durch den Verfahrensschritt S8 zusammengefasst. In einem Verfahrensschritt S9 wird gemäß der Zielobjektauswahl, so wie sie im Schritt S8 getroffen wurde, ein Befehl zum Anpassen des zumindest einen Fahrparameters an das ausgewählte Zielobjekt 26, 32 erzeugt.

Insgesamt zeigen die Beispiele, wie ein verbessertes Auswahlverfahren zur Auswahl eines Zielobjekts für ein Längsführungssystem eines Kraftfahrzeugs bereitgestellt werden kann.

### Bezugszeichenliste

- 10: Kraftfahrzeug
- 12: elektronisches Fahrzeugführungssystem
- 14: Längsführungssystem
- 16: Querführungssystem
- 18: Bewertungseinrichtung
- 20: Sensoren
- 22: Trennlinie, Fahrbahnbegrenzungslinie
- 24: Eigenfahrspur
- 26: erstes Zielobjekt
- 28: Fahrtrajektorie
- 30: Zielfahrspur
- 32: zweites Zielobjekt
- 34: Pfeil (keine Zielobjektauswahl)

## Patentansprüche

1. Verfahren zur Auswahl eines Zielobjekts (26, 32) für ein Längsführungssystem (14) eines Kraftfahrzeugs (10), wobei durch das Längsführungssystem (14) zumindest ein Fahrparameter des Kraftfahrzeugs (10) in Abhängigkeit von dem ausgewählten Zielobjekt (26, 32) angepasst wird, wobei
- das Kraftfahrzeug (10) zunächst entlang einer Eigenfahrspur (24) betrieben wird, wobei der zumindest eine Fahrparameter des Kraftfahrzeugs (10) während des Betriebs entlang der Eigenfahrspur (24) durch das Längsführungssystem (14) in Abhängigkeit von einem ersten Zielobjekt (26) angepasst wird, wobei das erste Zielobjekt (26) in Fahrtrichtung vor dem Kraftfahrzeug (10) entlang der Eigenfahrspur (24) angeordnet ist, wobei
- durch ein Querführungssystem (16) des Kraftfahrzeugs (10) ein zumindest teilautomatisierter Spurwechselvorgang für das Kraftfahrzeug (10) initiiert wird, wobei der Spurwechselvorgang einen Wechsel des Kraftfahrzeugs (10) von der Eigenfahrspur (24) auf eine zu der Eigenfahrspur (24) benachbart angeordnete Zielfahrspur (30) und einen Wechsel von dem ersten Zielobjekt (26) hin zu einem zweiten Zielobjekt (32) beinhaltet, wobei das zweite Zielobjekt (32) in Fahrtrichtung vor dem Kraftfahrzeug (10) zumindest teilweise entlang der Zielfahrspur (30) angeordnet ist,
**dadurch gekennzeichnet, dass**
falls das Querführungssystem (16) den Spurwechselvorgang unterbricht oder abbricht,
- durch eine Bewertungseinrichtung (18) eine Wahrscheinlichkeit dafür ermittelt wird, dass das Kraftfahrzeug (10) im weiteren Fahrtverlauf in die Eigenfahrspur (24) zurückkehrt, und in Abhängigkeit von der Wahrscheinlichkeit für den weiteren Fahrtverlauf entweder:
- das zweite Zielobjekt (32) beibehalten wird, oder
- erneut das erste Zielobjekt (26) ausgewählt wird, oder
- kein Zielobjekt (26, 32) ausgewählt wird.

2. Verfahren nach Anspruch 1, wobei die Wahrscheinlichkeit in Abhängigkeit von einem aktuellen Status des Längsführungssystems (14) des Kraftfahrzeugs (10) beim Unterbrechen oder Abbrechen des Spurwechselvorgangs ermittelt wird.

3. Verfahren nach einem der vorhergehenden Ansprüche, wobei die Wahrscheinlichkeit in Abhängigkeit von einem aktuellen Status des Querführungssystems (16) des Kraftfahrzeugs (10) beim Unterbrechen oder Abbrechen des Spurwechselvorgangs ermittelt wird.

4. Verfahren nach Anspruch 3, wobei der aktuelle Status des Querführungssystems (16) zumindest eine Information zu einem aktuell von dem Querführungssystem (16) geforderten Lenkmoment beinhaltet.

5. Verfahren nach einem der vorhergehenden Ansprüche, wobei die Wahrscheinlichkeit in Abhängigkeit von einer aktuellen Fahrbahnkrümmung der Fahrbahn entlang der Eigenfahrspur (24) und/oder der Zielfahrspur (30) ermittelt wird.

6. Verfahren nach einem der vorhergehenden Ansprüche, wobei die Wahrscheinlichkeit in Abhängigkeit von einer Fahrbahnquerneigung der Fahrbahn entlang der Eigenfahrspur (24) und/oder der Zielfahrspur (30) ermittelt wird.

7. Verfahren nach einem der vorhergehenden Ansprüche, wobei die Wahrscheinlichkeit in Abhängigkeit von einem aktuellen Fahrerlenkmoment ermittelt wird.

8. Verfahren nach einem der vorhergehenden Ansprüche, wobei die Wahrscheinlichkeit in Abhängigkeit von einer für das Kraftfahrzeug (10) bereitgestellten Routennavigation ermittelt wird.

9. Verfahren nach einem der vorhergehenden Ansprüche, wobei die Wahrscheinlichkeit in Abhängigkeit von einem Abstand und/oder einer Änderung des Abstands ermittelt wird, der beim Unterbrechen oder Abbrechen des Spurwechselvorgangs zwischen zumindest einem Reifen des Kraftfahrzeugs (10) und einer Trennlinie (22) zwischen der Eigenfahrspur (24) und der Zielfahrspur (30) besteht.

10. Verfahren nach Anspruch 9, wobei die Wahrscheinlichkeit in Abhängigkeit davon ermittelt wird, ob, und insbesondere in welchem Ausmaß, das Kraftfahrzeug (10) die Trennlinie (22) beim Unterbrechen oder Abbrechen des Spurwechselvorgang bereits zumindest teilweise überquert hat.

11. Verfahren nach einem der vorhergehenden Ansprüche, wobei mittels einer Benutzerschnittstelle des Kraftfahrzeugs (10) eine Aufforderung an einen Fahrer des Kraftfahrzeugs (10) bereitgestellt wird, das ausgewählte Zielobjekt (26, 32) zu bestätigen.

12. Elektronisches Fahrzeugführungssystem (12) zum zumindest teilweise automatisierten Betreiben eines Kraftfahrzeugs (10) mit einem Querführungssystem (16), einem Längsführungssystem (14) und einer Bewertungseinrichtung (18), wobei das elektronische Fahrzeugführungssystem (12) dazu ausgebildet ist, ein Verfahren nach einem der vorhergehenden Ansprüche durchzuführen.

13. Kraftfahrzeug (10) mit einem elektronischen Fahrzeugführungssystem (12) nach Anspruch 12.

14. Verfahren zum zumindest teilautomatisierten Betreiben eines Kraftfahrzeugs (10) nach Anspruch 13 mittels eines elektronischen Fahrzeugführungssystems (12) nach Anspruch 12, wobei in Abhängigkeit von der Zielobjektauswahl ein Befehl zum Anpassen des zumindest einen Fahrparameters an das ausgewählte Zielobjekt (26, 32) erzeugt wird.

## Claims

1. A method for selecting a target object (26, 32) for a longitudinal guidance system (14) of a motor vehicle (10), the longitudinal guidance system (14) adapting at least one driving parameter of the motor vehicle (10) on the basis of the selected target object (26, 32),
- the motor vehicle (10) being initially operated in its own lane (24), at least one driving parameter of the motor vehicle (10) being adapted during operation in the vehicle's own lane (24) by the longitudinal guidance system (14) on the basis of a first target object (26), the first target object (26) being arranged in front of the motor vehicle (10) in the vehicle's own lane (24) in terms of the direction of travel,
- an at least partially automated lane change process for the motor vehicle (10) being initiated by a lateral guidance system (16) of the motor vehicle (10), the lane change process involving the motor vehicle (10) changing from its own lane (24) to a target lane (30) adjacent to its own lane (24) and changing from the first target object (26) to a second target object (32), the second target object (32) being arranged in the target lane (30) so as to be at least partially in front of the motor vehicle (10) in terms of the direction of travel,
**characterized in that**
if the lateral guidance system (16) interrupts or terminates the lane change process,
- the probability that the motor vehicle (10) will return to its own lane (24) as it continues its journey is determined by an evaluation device (18), and, depending on the probability determined for the future leg of the vehicle's journey:
- the second target object (32) is retained, or
- the first target object (26) is selected again, or
- no target object (26, 32) is selected.

2. The method according to claim 1, wherein the probability is determined on the basis of the current status of the longitudinal guidance system (14) of the motor vehicle (10) when the lane change process is interrupted or terminated.

3. The method according to any one of the preceding claims, wherein the probability is determined on the basis of the current status of the lateral guidance system (16) of the motor vehicle (10) when the lane change process is interrupted or terminated.

4. The method according to claim 3, wherein the current status of the lateral guidance system (16) includes at least one piece of information about the steering torque currently required by the lateral guidance system (16).

5. The method according to any one of the preceding claims, wherein the probability is determined on the basis of the current curvature of the road in the vehicle's own lane (24) and/or in the target lane (30).

6. The method according to any one of the preceding claims, wherein the probability is determined on the basis of the cross slope of the road in the vehicle's own lane (24) and/or in the target lane (30).

7. The method according to any one of the preceding claims, wherein the probability is determined on the basis of the current driver steering torque.

8. The method according to any one of the preceding claims, wherein the probability is determined on the basis of a route navigation provided for the motor vehicle (10).

9. The method according to any one of the preceding claims, wherein the probability is determined on the basis of the distance and/or a change in distance between at least one tire of the motor vehicle (10) and a dividing line (22) between the vehicle's own lane (24) and the target lane (30) that exists when the lane change process is interrupted or terminated.

10. The method according to claim 9, wherein the probability is determined on the basis of whether, and in particular to what extent, the motor vehicle (10) has already at least partially crossed the dividing line (22) when the lane change process is interrupted or terminated.

11. The method according to any one of the preceding claims, wherein a request is provided to a driver of the motor vehicle (10) by means of a user interface of the motor vehicle (10) to confirm the selected target object (26, 32).

12. An electronic vehicle guidance system (12) for the at least partially automated operation of a motor vehicle (10), comprising a lateral guidance system (16), a longitudinal guidance system (14) and an evaluation device (18), wherein the electronic vehicle guidance system (12) is configured to perform a method according to any one of the preceding claims.

13. A motor vehicle (10) comprising an electronic vehicle guidance system (12) according to claim 12.

14. A method for the at least partially automated operation of a motor vehicle (10) according to claim 13 by means of an electronic vehicle guidance system (12) according to claim 12, wherein, depending on the target object selected, a command to adapt the at least one driving parameter to the selected target object (26, 32) is generated.

## Revendications

1. Procédé de sélection d'un objet cible (26, 32) pour un système de guidage longitudinal (14) d'un véhicule automobile (10), dans lequel au moins un paramètre de conduite du véhicule automobile (10) est adapté par le système de guidage longitudinal (14) en fonction de l'objet cible (26, 32) sélectionné, dans lequel
- le véhicule automobile (10) est d'abord exploité le long d'une voie de circulation propre (24), dans lequel l'au moins un paramètre de conduite du véhicule automobile (10) est adapté pendant l'exploitation le long de la voie de circulation propre (24) par le système de guidage longitudinal (14) en fonction d'un premier objet cible (26), dans lequel le premier objet cible (26) est agencé dans le sens de la conduite devant le véhicule automobile (10) le long de la voie de circulation propre (24), dans lequel
- un processus de changement de voie au moins partiellement automatisé pour le véhicule automobile (10) est lancé par un système de guidage transversal (16) du véhicule automobile (10), dans lequel le processus de changement de voie contient un passage du véhicule automobile (10) de la voie de circulation propre (24) à une voie de circulation cible (30) agencée au voisinage de la voie de circulation propre (24) et un passage du premier objet cible (26) à un second objet cible (32), dans lequel le second objet cible (32) est agencé dans le sens de la conduite devant le véhicule automobile (10) au moins partiellement le long de la voie de circulation cible (30), **caractérisé en ce que**
si le système de guidage transversal (16) interrompt ou annule le processus de changement de voie,
- une probabilité pour que le véhicule automobile (10) revienne dans la voie de circulation propre (24) dans la suite du trajet est déterminée par un dispositif d'évaluation (18), et en fonction de la probabilité pour la suite du trajet soit :
- le second objet cible (32) est maintenu, soit
- le premier objet cible (26) est à nouveau sélectionné, soit
- aucun objet cible (26, 32) n'est sélectionné.

2. Procédé selon la revendication 1, dans lequel la probabilité est déterminée en fonction d'un état actuel du système de guidage longitudinal (14) du véhicule automobile (10) lors de l'interruption ou de l'annulation du processus de changement de voie.

3. Procédé selon l'une des revendications précédentes, dans lequel la probabilité est déterminée en fonction d'un état actuel du système de guidage transversal (16) du véhicule automobile (10) lors de l'interruption ou de l'annulation du processus de changement de voie.

4. Procédé selon la revendication 3, dans lequel l'état actuel du système de guidage transversal (16) contient au moins une information concernant un couple de direction actuellement requis par le système de guidage transversal (16).

5. Procédé selon l'une des revendications précédentes, dans lequel la probabilité est déterminée en fonction d'une courbure de la chaussée actuelle le long de la voie de circulation propre (24) et/ou de la voie de circulation cible (30).

6. Procédé selon l'une des revendications précédentes, dans lequel la probabilité est déterminée en fonction d'une pente transversale de chaussée de la chaussée le long de la voie de circulation propre (24) et/ou de la voie de circulation cible (30).

7. Procédé selon l'une des revendications précédentes, dans lequel la probabilité est déterminée en fonction d'un couple de direction de conducteur actuel.

8. Procédé selon l'une des revendications précédentes, dans lequel la probabilité est déterminée en fonction d'une navigation d'itinéraire fournie pour le véhicule automobile (10).

9. Procédé selon l'une des revendications précédentes, dans lequel la probabilité est déterminée en fonction d'une distance et/ou d'une variation de la distance qui existe entre au moins un pneu du véhicule automobile (10) et une ligne de séparation (22) entre la voie de circulation propre (24) et la voie de circulation cible (30) lors de l'interruption ou de l'annulation du processus de changement de voie.

10. Procédé selon la revendication 9, dans lequel la probabilité est déterminée en fonction de si, et en particulier dans quelle mesure, le véhicule automobile (10) a déjà franchi au moins partiellement la ligne de séparation (22) lors de l'interruption ou de l'annulation du processus de changement de voie.

11. Procédé selon l'une des revendications précédentes, dans lequel par le biais d'une interface utilisateur du véhicule automobile (10), une demande est fournie à un conducteur du véhicule automobile (10) de confirmer l'objet cible (26, 32) sélectionné.

12. Système de guidage de véhicule (12) électronique pour l'exploitation au moins partiellement automatisée d'un véhicule automobile (10) avec un système de guidage transversal (16), un système de guidage longitudinal (14) et un dispositif d'évaluation (18), dans lequel le système de guidage de véhicule (12) électronique est conçu pour exécuter un procédé selon l'une des revendications précédentes.

13. Véhicule automobile (10) comportant un système de guidage de véhicule (12) électronique selon la revendication 12.

14. Procédé d'exploitation au moins partiellement automatisée d'un véhicule automobile (10) selon la revendication 13 par le biais d'un système de guidage de véhicule (12) électronique selon la revendication 12, dans lequel, en fonction de la sélection d'objet cible, une instruction est générée pour adapter l'au moins un paramètre de conduite à l'objet cible (26, 32) sélectionné.
